# EUROPEAN PATENT APPLICATION

(11) **EP 3 009 917 A1**
(43) Date of publication of application: **20.04.2016**
(21) Application number: 15187490.6
(22) Date of filing: 29.09.2015
(51) Int. Cl.: G06F 1/26, G06F 1/32, G06F 1/20, G06F 9/50

(54) **ENERGY CONSUMPTION MANAGEMENT METHOD, MANAGEMENT DEVICE, AND DATA CENTER**

(30) Priority: 15.10.2014 CN 201410545534
(71) Applicant: Huawei Technologies Co., Ltd., Longgang District Shenzhen, Guangdong 518129 (CN)
(72) Inventor: PI, Xianwen, Shenzhen Guangdong 518129 (CN); LONG, Bailin, Shenzhen Guangdong 518129 (CN); HAN, Haixiao, Shenzhen Guangdong 518129 (CN)
(74) Representative: Gill Jennings & Every LLP

(57) **Abstract**

The present invention discloses an energy consumption management method, where the method is applied to a management device of a data center, the data center further includes a communications device, a cooling device, and a power supply device, the cooling device cools the communications device and the power supply device, and the power supply device supplies power to the communications device and the cooling device. The method includes: acquiring, by the management device, current service load of the communications device, current output power of the power supply device, and current cooling capacity of the cooling device; and adjusting, by the management device, the current output power of the power supply device and the current cooling capacity of the cooling device, so that adjusted output power of the power supply device and adjusted cooling capacity of the cooling device match the current service load of the communications device; or adjusting, by the management device, the current service load of the communications device, so that adjusted service load of the communications device matches the current output power of the power supply device and the current cooling capacity of the cooling device. Embodiments of the present invention improve energy utilization efficiency of the power supply device and the cooling device.

## Description

### TECHNICAL FIELD

The present invention relates to the field of communications technologies, and in particular, to an energy consumption management method, a management device, and a data center.

### BACKGROUND

At present, a data center has become an important composition part of a production system of an enterprise, and is an important tool to enhance competitiveness and operating efficiency of the enterprise. With rapid development of the Internet and the mobile Internet, an explosive increase in personal information consumption demands and in an enterprise informatization degree, and the rise of big data, cloud computing, and the Internet of Things, investment in the data center rapidly increases, the scale of the data center expands day by day, the density thereof increasingly grows, and complexity of the data center becomes higher and higher.

As a quantity of data centers increases and the scale thereof expands, power consumption of the data centers already accounts for a considerable proportion in global power usage. Energy costs are long-run costs of the data center, which often exceed an investment in infrastructures. By using a data center, with power usage effectiveness (Power Usage Effectiveness, PUE) of 2, in which IT devices having total power consumption of 1 MW are deployed, as an example, annual power consumption of this data center may reach 17.52 million kWh, and power consumption thereof reaches 175 million kWh in a 10-year life cycle. On a global scale, annual power consumption of the data centers has reached 300 billion kWh, which accounts for about 1% to 2% of the global total power generation and is equivalent to 100 million tons of standard coal, thereby bringing a non-negligible effect on the environment. Currently, PUE of foreign data centers is about 1.8, and PUE of most domestic data centers ranges from 2.2 to 3.0. Energy consumption of non-IT devices is excessively high, and huge electricity expenditure erodes profit of enterprises and increases an economic burden of the enterprises.

During planning and design of a data center, more emphasis is put on high reliability of a power supply device and a cooling device, and therefore, output capacity of the power supply device and that of the cooling device are generally designed according to maximum load of a communications device. However, the communications device does not always run at the maximum load, and probably, load of the communications device is generally low most of the time, which results in low energy utilization efficiency of the power supply device and the cooling device, and causes high energy loss.

### SUMMARY

To resolve a problem in the prior art that energy loss of a data center is excessively high, embodiments of the present invention provide an energy consumption management method, which can enable cooling capacity of a cooling device and output power of a power supply device to match load of a communications device by adjusting service load of the communications device or adjusting the cooling capacity of the cooling device and the output power of the power supply device, thereby improving energy utilization efficiency of the power supply device and the cooling device, and reducing waste of energy. The embodiments of the present invention further provide a corresponding management device and data center.

A first aspect of the present invention provides an energy consumption management method, where the method is applied to a management device of a data center, the data center further includes a communications device, a cooling device, and a power supply device, the cooling device cools the communications device and the power supply device, and the power supply device supplies power to the communications device and the cooling device, where the method includes:
acquiring, by the management device, current service load of the communications device, current output power of the power supply device, and current cooling capacity of the cooling device; and
adjusting, by the management device, the current output power of the power supply device and the current cooling capacity of the cooling device, so that adjusted output power of the power supply device and adjusted cooling capacity of the cooling device match the current service load of the communications device; or
adjusting, by the management device, the current service load of the communications device, so that adjusted service load of the communications device matches the current output power of the power supply device and the current cooling capacity of the cooling device.

With reference to the first aspect, in a first possible implementation manner, the adjusting, by the management device, the current output power of the power supply device and the current cooling capacity of the cooling device, so that adjusted output power of the power supply device and adjusted cooling capacity of the cooling device match the current service load of the communications device includes:
determining, by the management device, output power of the power supply device and
cooling capacity of the cooling device that are required by the current service load of the communications device; and
adjusting, by the management device according to the required output power of the power supply device and the required cooling capacity of the cooling device, the current output power of the power supply device to the required output power of the power supply device and adjusting the current cooling capacity of the cooling device to the required cooling capacity of the cooling device.

With reference to the first possible implementation manner of the first aspect, in a second possible implementation manner, when there are multiple power supply devices, the adjusting the current output power of the power supply device to the required output power of the power supply device includes:
adjusting output power of at least one power supply device of the multiple power supply devices to output power corresponding to an optimal energy efficiency point of the power supply device, and turning off power supply devices other than the at least one power supply device.

With reference to the first or the second possible implementation manner of the first aspect, in a third possible implementation manner, when there are multiple cooling devices, the adjusting the current cooling capacity of the cooling device to the required cooling capacity of the cooling device includes:
adjusting cooling capacity of at least one cooling device of the multiple cooling devices to cooling capacity corresponding to an optimal energy efficiency point of the cooling device, and turning off cooling devices other than the at least one cooling device.

With reference to the first aspect, in a fourth possible implementation manner, the adjusting, by the management device, the current service load of the communications device, so that adjusted service load of the communications device matches the current output power of the power supply device and the current cooling capacity of the cooling device includes:
determining, by the management device, service load of the communications device that can be met by the current output power of the power supply device and the current cooling capacity of the cooling device; and
scheduling, by the management device according to the service load of the communications device that can be met, a service from another communications device except the communications device to the communications device, or scheduling a service in the communications device to another communications device except the communications device.

With reference to the fourth possible implementation manner of the first aspect, in a fifth possible implementation manner, before the determining, by the management device, service load of the communications device that can be met by the current output power of the power supply device and the current cooling capacity of the cooling device, the method further includes:
adjusting, by the management device, output power of the power supply device to output power corresponding to an optimal energy efficiency point of the power supply device, and/or adjusting cooling capacity of the cooling device to cooling capacity corresponding to an optimal energy efficiency point of the cooling device; where correspondingly, the determining, by the management device, service load of the communications device that can be met by the current output power of the power supply device and the current cooling capacity of the cooling device includes:
   determining, by the management device, service load of the communications device that can be borne by the output power corresponding to the optimal energy efficiency point of the power supply device and/or the cooling capacity corresponding to the optimal energy efficiency point of the cooling device; and
   the scheduling, by the management device according to the service load of the communications device that can be met, a service from another communications device except the communications device to the communications device, or scheduling a service in the communications device to another communications device except the communications device includes:
      scheduling, by the management device according to the service load of the communications device that can be borne, a service from another communications device except the communications device to the communications device, or scheduling a service in the communications device to another communications device except the communications device.

With reference to the first aspect or any one of the first to the fifth possible implementation manners of the first aspect, in a sixth possible implementation manner, the method further includes:
acquiring, by the management device, inner temperature information of the communications device from the communications device; and
adjusting, by the management device, the cooling capacity of the cooling device according to a magnitude relationship between the inner temperature information and a first pre-configured temperature threshold.

With reference to the first aspect or any one of the first to the fifth possible implementation manners of the first aspect, in a seventh possible implementation manner, the method further includes:
acquiring, by the management device, outer temperature information of the communications device from anenvironment monitoring device; and
adjusting, by the management device, the cooling capacity of the cooling device according to a magnitude relationship between the outer temperature information and a second pre-configured temperature threshold.

A second aspect of the present invention provides a management device, where the management device is applied to a data center, the data center further includes a communications device, a cooling device, and a power supply device, the cooling device cools the communications device and the power supply device, and the power supply device supplies power to the communications device and the cooling device, where the management device includes:
an acquiring unit, configured to acquire current service load of the communications device, current output power of the power supply device, and current cooling capacity of the cooling device; and
a first adjusting unit, configured to adjust the current output power of the power supply device and the current cooling capacity of the cooling device that are acquired by the acquiring unit, so that adjusted output power of the power supply device and adjusted cooling capacity of the cooling device match the current service load of the communications device; or
a second adjusting unit, configured to adjust the current service load of the communications device that is acquired by the acquiring unit, so that adjusted service load of the communications device matches the current output power of the power supply device and the current cooling capacity of the cooling device.

With reference to the second aspect, in a first possible implementation manner, the first adjusting unit includes:
a first determining subunit, configured to determine output power of the power supply device and cooling capacity of the cooling device that are required by the current service load of the communications device; and
a first adjusting subunit, configured to adjust, according to the required output power of the power supply device and the required cooling capacity of the cooling device that are determined by the first determining subunit, the current output power of the power supply device to the required output power of the power supply device and adjust the current cooling capacity of the cooling device to the required cooling capacity of the cooling device.

With reference to the first possible implementation manner of the second aspect, in a second possible implementation manner,
the first adjusting subunit is specifically configured to: when there are multiple power supply devices, adjust output power of at least one power supply device of the multiple power supply devices to output power corresponding to an optimal energy efficiency point of the power supply device, and turn off power supply devices other than the at least one power supply device.

With reference to the first or the second possible implementation manner of the second aspect, in a third possible implementation manner,
the first adjusting subunit is specifically configured to: when there are multiple cooling devices, adjust cooling capacity of at least one cooling device of the multiple cooling devices to cooling capacity corresponding to an optimal energy efficiency point of the cooling device, and turn off cooling devices other than the at least one cooling device.

With reference to the second aspect, in a fourth possible implementation manner, the second adjusting unit includes:
a second determining subunit, configured to determine service load of the communications device that can be met by the current output power of the power supply device and the current cooling capacity of the cooling device; and
a scheduling subunit, configured to schedule, according to the service load of the communications device that can be met and that is determined by the second determining subunit, a service from another communications device except the communications device to the communications device, or schedule a service in the communications device to another communications device except the communications device.

With reference to the fourth possible implementation manner of the second aspect, in a fifth possible implementation manner, the second adjusting unit further includes: a second adjusting subunit, where
the second adjusting subunit is configured to adjust output power of the power supply device to output power corresponding to an optimal energy efficiency point of the power supply device; and/or adjust cooling capacity of the cooling device to cooling capacity corresponding to an optimal energy efficiency point of the cooling device; where
the second determining subunit is configured to determine service load of the communications device that can be borne by the output power corresponding to the optimal energy efficiency point of the power supply device and/or the cooling capacity corresponding to the optimal energy efficiency point of the cooling device after adjustment of the second adjusting subunit; and
the scheduling subunit is configured to schedule, according to the service load of the communications device that can be borne and that is determined by the second determining subunit, a service from another communications device except the communications device to the communications device, or schedule a service in the communications device to another communications device except the communications device.

With reference to the second aspect or any one of the first to the fifth possible implementation manners of the second aspect, in a sixth possible implementation manner,
the acquiring unit is further configured to acquire inner temperature information of the communications device from the communications device; and
the first adjusting unit is further configured to adjust the cooling capacity of the cooling device according to a magnitude relationship between the inner temperature information acquired by the acquiring unit and a first pre-configured temperature threshold.

With reference to the second aspect or any one of the first to the fifth possible implementation manners of the second aspect, in a seventh possible implementation manner,
the acquiring unit is further configured to acquire outer temperature information of the communications device from an environment monitoring device; and the first adjusting unit is further configured to adjust the cooling capacity of the cooling device according to a magnitude relationship between the outer temperature information acquired by the acquiring unit and a second pre-configured temperature threshold.

A third aspect of the present invention provides a data center, including: a management device, a communications device, a cooling device, and a power supply device, where the cooling device cools the communications device and the power supply device, and the power supply device supplies power to the communications device and the cooling device;
the management device acquires current service load of the communications device, current output power of the power supply device, and current cooling capacity of the cooling device; and
the management device adjusts the current output power of the power supply device and the current cooling capacity of the cooling device, so that adjusted output power of the power supply device and adjusted cooling capacity of the cooling device match the current service load of the communications device; or
the management device adjusts the current service load of the communications device, so that adjusted service load of the communications device matches the current output power of the power supply device and the current cooling capacity of the cooling device.

The energy consumption management method provided by the embodiments of the present invention is applied to a management device of a data center, where the data center further includes a communications device, a cooling device, and a power supply device, the cooling device cools the communications device and the power supply device, and the power supply device supplies power to the communications device and the cooling device. The method includes: acquiring, by the management device, current service load of the communications device, current output power of the power supply device, and current cooling capacity of the cooling device; and adjusting, by the management device, the current output power of the power supply device and the current cooling capacity of the cooling device, so that adjusted output power of the power supply device and adjusted cooling capacity of the cooling device match the current service load of the communications device; or adjusting, by the management device, the current service load of the communications device, so that adjusted service load of the communications device matches the current output power of the power supply device and the current cooling capacity of the cooling device. Compared with the prior art in which low energy utilization efficiency of the power supply device and the cooling device is caused by generally low load of the communications device, resulting in high energy loss, the energy consumption management method provided by the embodiments of the present invention can enable cooling capacity of the cooling device and output power of the power supply device to match load of the communications device by adjusting the service load of the communications device or adjusting the output power of the cooling device and the output power of the power supply device, thereby improving the energy utilization efficiency of the power supply device and the cooling device, and reducing waste of energy.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an embodiment of a data center according to an embodiment of the present invention;
FIG. 2 is a schematic diagram of another embodiment of a data center according to an embodiment of the present invention;
FIG. 3 is a schematic diagram of an embodiment of an energy consumption management method according to an embodiment of the present invention;
FIG. 4 is a curve chart showing dynamic energy efficiency of a power supply device according to an embodiment of the present invention;
FIG. 5 is a curve chart showing dynamic energy efficiency of a cooling device according to an embodiment of the present invention;
FIG. 6 is a schematic diagram of an embodiment of a management device according to an embodiment of the present invention;
FIG. 7 is a schematic diagram of another embodiment of a management device according to an embodiment of the present invention;
FIG. 8 is a schematic diagram of another embodiment of a management device according to an embodiment of the present invention;
FIG. 9 is a schematic diagram of another embodiment of a management device according to an embodiment of the present invention;
FIG. 10 is a schematic diagram of another embodiment of a management device according to an embodiment of the present invention; and
FIG. 11 is a schematic diagram of an embodiment of a data center according to an embodiment of the present invention.

### DESCRIPTION OF EMBODIMENTS

Embodiments of the present invention provide an energy consumption management method, which can enable cooling capacity of a cooling device and output power of a power supply device to match load of a communications device by adjusting service load of the communications device or adjusting the cooling capacity of the cooling device and the output power of the power supply device, thereby improving energy utilization efficiency of the power supply device and the cooling device, and reducing waste of energy. The embodiments of the present invention further provide a corresponding device and system. Detailed descriptions are given in the following.

To make a person skilled in the art understand the technical solutions in the present invention better, the following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

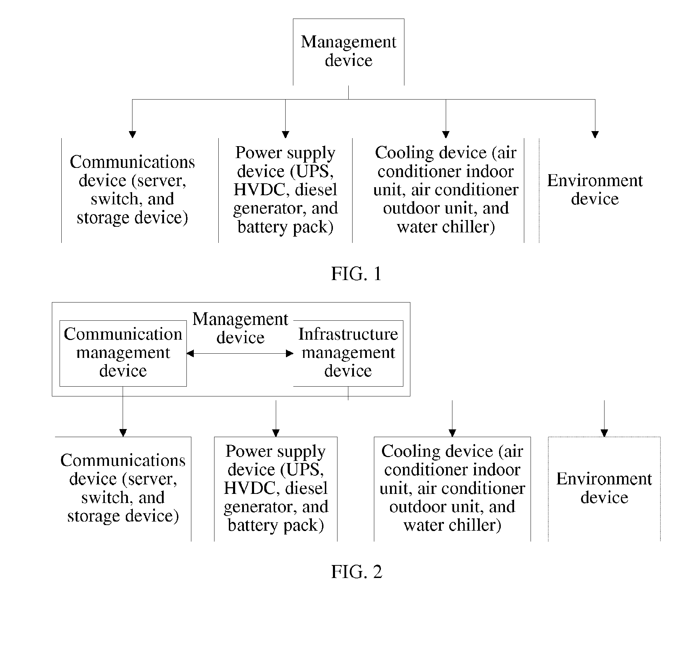

An energy consumption management method used by a data center and provided by an embodiment of the present invention includes integrated management and separated management. FIG. 1 shows the integrated management and FIG. 2 shows the separated management.

As shown in FIG. 1, a data center includes a management device, a communications device, a cooling device, and a power supply device, where the cooling device cools the communications device and the power supply device, and the power supply device supplies power to the communications device and the cooling device. In this embodiment of the present invention, FIG. 1 further includes an environment monitoring device, and actually, the environment monitoring deviceis an optional device, which may be an independent device or may be a component installed in the communications device. The management device in FIG. 1 manages the communications device, the power supply device, the cooling device, and the environment monitoring device.

As shown in FIG. 2, a data center includes a management device, a communications device, a cooling device, and a power supply device, where the cooling device cools the communications device and the power supply device, and the power supply device supplies power to the communications device and the cooling device. In this embodiment of the present invention, FIG. 2 further includes an environment monitoring device, and actually, the environment monitoring deviceis an optional device, which may be an independent device or may be a component installed in the communications device. The management device includes a communication management device and an infrastructure management device, where the communication management device is responsible for managing the communications device, and the infrastructure management device is responsible for managing the power supply device, the cooling device, and the environment monitoring device.

The communications device shown in FIG. 1 and FIG. 2 may include a server, a switch, a storage device, and the like; the power supply device may include an uninterruptible power supply (Uninterruptible Power Supply, UPS), a high-voltage direct current (high-voltage direct current, HVDC), a diesel generator, a battery pack, and the like; the cooling device may include an air conditioner indoor unit, an air conditioner outdoor unit, a water chiller, and the like; and the environment monitoring device may include devices such as a thermometer, a hygrometer, a smoke detector, a flooding detector, and an infrared device.

There may be multiple communications devices in the data center in this embodiment of the present invention; and the cooling device and the power supply device may be each a modular device, for example, the power supply device may include multiple modular UPSes. These communications devices, the cooling device, and the power supply device may be distributed in a modular data center including a cabinet, a cooling device, a power supply device, and a communications device, or may be placed in an equipment room together. One power supply device may independently supply power to one communications device, or multiple power supply devices may together supply power to multiple communications devices. The cooling device may cool one communications device, or multiple cooling devices may together cool multiple communications devices. In this case, the communications device may be construed as a cluster communications device, the power supply device is construed as a cluster power supply device, the cooling device is construed as a cluster cooling device, and the management device may manage devices in multiple modular data centers or in multiple equipment rooms.

The management device may acquire location information of each device, a power supply relationship between the power supply device and the communications device, and a cooling relationship between the cooling device and the communications device. In this way, each device can be accurately controlled during energy consumption adjustment.

By means of either integrated management or separated management, in the energy consumption management method provided by the embodiments of the present invention, related information can be acquired from the communications device, the power supply device, the cooling device, and the environment monitoring device, and then the communications device is adjusted, or the power supply device and the cooling device are adjusted, so that service load of the communications device matches output power of the power supply device and cooling capacity of the cooling device, thereby reducing energy consumption.

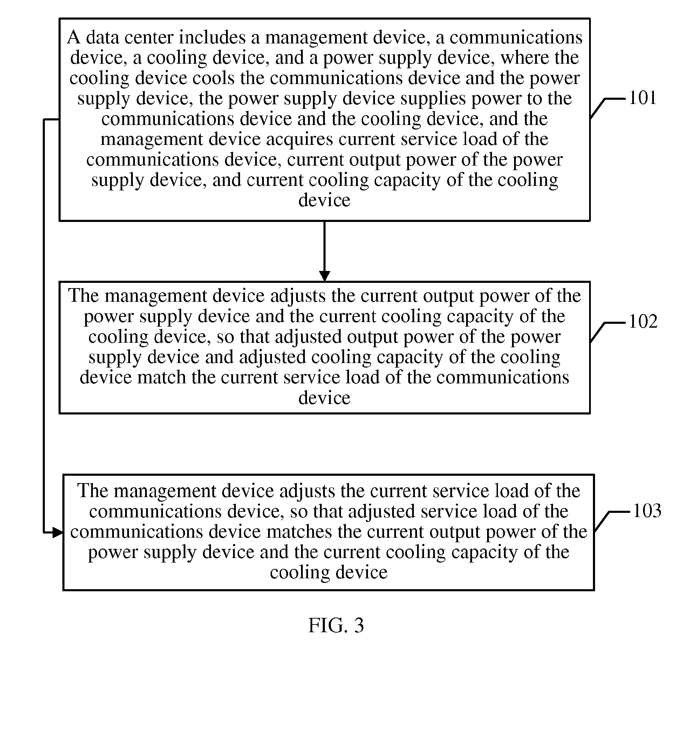

Referring to FIG. 3, an energy consumption management method provided by this embodiment of the present invention is applied to a management device of a data center, where the data center further includes a communications device, a cooling device, and a power supply device, the cooling device cools the communications device and the power supply device, and the power supply device supplies power to the communications device and the cooling device, where the method includes:
101. The management device acquires current service load of the communications device, current output power of the power supply device, and current cooling capacity of the cooling device.
102. The management device adjusts the current output power of the power supply device and the current cooling capacity of the cooling device, so that adjusted output power of the power supply device and adjusted cooling capacity of the cooling device match the current service load of the communications device; or
103. the management device adjusts the current service load of the communications device, so that adjusted service load of the communications device matches the current output power of the power supply device and the current cooling capacity of the cooling device.

The energy consumption management method provided by this embodiment of the present invention is applied to a management device of a data center, where the data center further includes a communications device, a cooling device, and a power supply device, the cooling device cools the communications device and the power supply device, and the power supply device supplies power to the communications device and the cooling device. The method includes: acquiring, by the management device, current service load of the communications device, current output power of the power supply device, and current cooling capacity of the cooling device; and adjusting, by the management device, the current output power of the power supply device and the current cooling capacity of the cooling device, so that adjusted output power of the power supply device and adjusted cooling capacity of the cooling device match the current service load of the communications device; or adjusting, by the management device, the current service load of the communications device, so that adjusted service load of the communications device matches the current output power of the power supply device and the current cooling capacity of the cooling device. Compared with the prior art in which low energy utilization efficiency of the power supply device and the cooling device is caused by generally low load of the communications device, resulting in high energy loss, the energy consumption management method provided by this embodiment of the present invention can enable cooling capacity of the cooling device and output power of the power supply device to match load of the communications device by adjusting the service load of the communications device or adjusting the cooling capacity of the cooling device and the output power of the power supply device, thereby improving the energy utilization efficiency of the power supply device and the cooling device, and reducing waste of energy. Optionally, on the basis of the embodiment corresponding to FIG. 3, in a first optional embodiment of the energy consumption management method provided by this embodiment of the present invention, the adjusting, by the management device, the current output power of the power supply device and the current cooling capacity of the cooling device, so that adjusted output power of the power supply device and adjusted cooling capacity of the cooling device match the current service load of the communications device may include:
determining, by the management device, output power of the power supply device and cooling capacity of the cooling device that are required by the current service load of the communications device; and
adjusting, by the management device according to the required output power of the power supply device and the required cooling capacity of the cooling device, the current output power of the power supply device to the required output power of the power supply device and adjusting the current cooling capacity of the cooling device to the required cooling capacity of the cooling device.

In this embodiment of the present invention, when the current service load of the communications device is relatively low, the power supply device and the cooling device do not need to output lots of electric energy and coldness. However, in this case, if output power of the power supply device is high and cooling capacity of the cooling device is large, superfluous electric energy and coldness are provided for the communications device, so that energy is vainly consumed. Alternatively, when current load of the communications device is relatively high, the power supply device and the cooling device need to output lots of electric energy and coldness to meet a requirement of the communications device. However, in this case, if output power of the power supply device is low and cooling capacity of the cooling device is small, the electric energy provided by the power supply device and the coldness provided by the cooling device cannot meet a requirement of the communications device, which causes reduced stability of the communications device. Therefore, in order to not only ensure the stability of the communications device but also reduce the energy consumption, the management device may dynamically adjust the output power of the power supply device and the cooling capacity of the cooling device according to the service load of the communications device, so as to meet the requirement of the communications device.

An adjustment sequence during adjustment of the output power of the power supply device and the cooling capacity of the cooling device may not be considered, and preferably, the output power of the power supply device is first adjusted and then the cooling capacity of the cooling device is adjusted, so as to avoid that if the cooling capacity of the cooling device is first adjusted, after adjustment of the output power of the power supply device, the cooling capacity of the cooling device does not conform to adjusted output power of the power supply device, and the cooling device needs to be adjusted for a second time.

Optionally, on the basis of the first optional embodiment, in a second optional embodiment of the energy consumption management method provided by this embodiment of the present invention, when there are multiple power supply devices, the adjusting the current output power of the power supply device to the required output power of the power supply device may include:
adjusting output power of at least one power supply device of the multiple power supply devices to output power corresponding to an optimal energy efficiency point of the power supply device, and turning off power supply devices other than the at least one power supply device.

Optionally, on the basis of the first or the second optional embodiment, in a third optional embodiment of the energy consumption management method provided by this embodiment of the present invention, when there are multiple cooling devices,
the adjusting the current cooling capacity of the cooling device to the required cooling capacity of the cooling device may include:
adjusting cooling capacity of at least one cooling device of the multiple cooling devices to cooling capacity corresponding to an optimal energy efficiency point of the cooling device, and turning off cooling devices other than the at least one cooling device.

In the second or the third optional embodiment of the present invention, the case that the power supply device and the cooling device each have a respective optimal energy efficiency point is taken into consideration, where the optimal energy efficiency point is a point at which energy conversion efficiency is highest, energy efficiency of the power supply device is highest at the optimal energy efficiency point of the power supply device, and energy efficiency of the cooling device is highest at the optimal energy efficiency point of the cooling device, that is, energy loss of the power supply device that is caused at output power corresponding to the optimal energy efficiency point of the power supply device is lowest, and energy loss of the cooling device that is caused at cooling capacity corresponding to the optimal energy efficiency point of the cooling device is lowest. Therefore, when multiple power supply devices supply power to the communications device, output power of one or more of the power supply devices is adjusted to the output power corresponding to the optimal energy efficiency point of the power supply device, thereby reducing energy consumption of the power supply device; when there are multiple cooling devices, cooling capacity of one or more of the cooling devices is adjusted to the cooling capacity corresponding to the optimal energy efficiency point of the cooling device; and then the other power supply devices and the other cooling devices are turned off, thereby reducing energy consumption of the cooling device. There may be both multiple power supply devices and multiple cooling devices, or there may be either multiple power supply devices or multiple cooling devices. In either combination manner, the energy consumption of the power supply device or the cooling device can be reduced; and when there are both multiple power supply devices and multiple cooling devices, the energy consumption can be minimized. Description is made below by using an example in which there are both multiple power supply devices and multiple cooling devices. If the communications device requires the power supply device to perform output at 50KW output power and requires the cooling device to perform output at 50KW cooling capacity, and if there are five power supply devices and five cooling devices, the power supply devices and the cooling devices perform output in a current control mode, and probably, each power supply device outputs 10KW power and each cooling device outputs 10KW cooling capacity. If the energy efficiency of the power supply device is optimal at 25KW output power and the energy efficiency of the cooling device is optimal at 25KW cooling capacity, power supply devices and cooling devices that need to be kept are determined according to an algorithm of a relationship among space, power supply, and cooling, and then the two determined power supply devices that separately output 25KW power are kept, and the other three power supply devices are turned off; and the two determined cooling devices that separately output 25KW cooling capacity are kept, and the other three cooling devices are turned off. In this way, the power supply devices and the cooling devices all work at the optimal energy efficiency point, and the power supply devices and the cooling devices all achieve minimum energy consumption. The other power supply devices and the other cooling devices are turned off, and do not need to consume energy, thereby minimizing the energy loss.

In this embodiment of the present invention, the optimal energy efficiency point of the power supply device and the optimal energy efficiency point of the cooling device may be calculated by a developer in advance and stored in the power supply device and the cooling device. The management device may directly acquire the optimal energy efficiency points, or the management device may dynamically calculate the optimal energy efficiency points according to related information such as temperature, humidity, and an altitude of an environment in which the power supply device and the cooling device are located. In addition, a curve chart showing dynamic energy efficiency of each power supply device and a curve chart showing dynamic energy efficiency of each cooling device may further be established. The optimal energy efficiency point of the power supply device is determined from the curve chart showing the dynamic energy efficiency of the power supply device, and the optimal energy efficiency point of the cooling device is determined from the curve chart showing the dynamic energy efficiency of the cooling device. The solution provided by this embodiment of the present invention can enable the power supply device and the cooling device to run towards a highest point in respective energy efficiency curves thereof, thereby minimizing the energy loss.

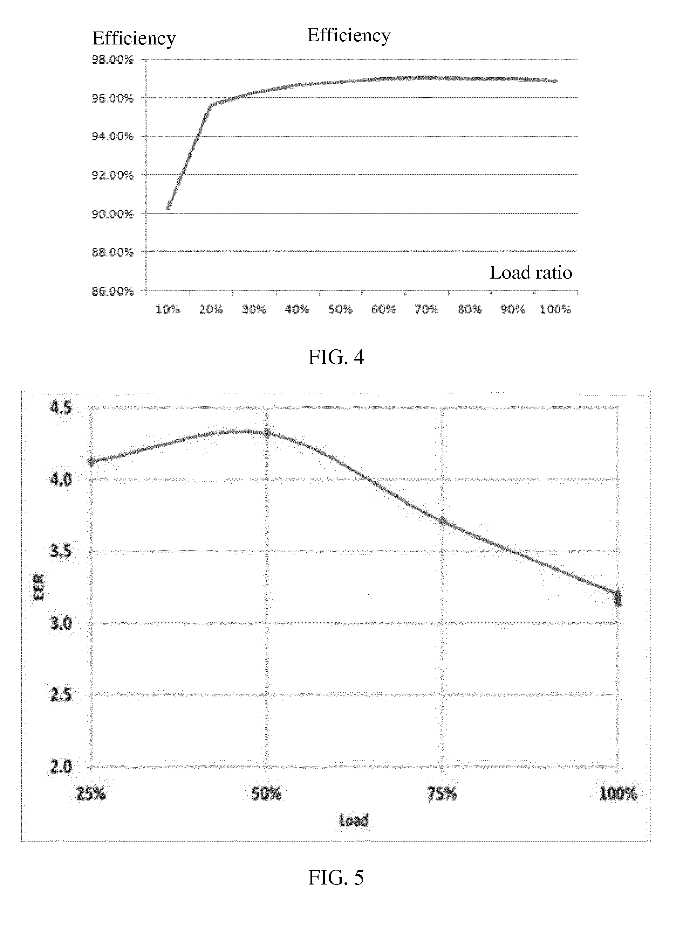

For understanding of the curve chart showing the dynamic energy efficiency of the power supply device, reference may be made to FIG. 4; and for understanding of the curve chart showing the dynamic energy efficiency of the cooling device, reference may be made to FIG. 5. FIG. 4 and FIG. 5 are merely trend charts, and curve charts showing dynamic energy efficiency of different areas may be different.

Optionally, on the basis of the embodiment corresponding to FIG. 3, in a fourth optional embodiment of the energy consumption management method provided by this embodiment of the present invention, the adjusting, by the management device, the current service load of the communications device, so that adjusted service load of the communications device matches the current output power of the power supply device and the current cooling capacity of the cooling device may include:
determining, by the management device, service load of the communications device that can be met by the current output power of the power supply device and the current cooling capacity of the cooling device; and
scheduling, by the management device according to the service load of the communications device that can be met, a service from another communications device except the communications device to the communications device, or scheduling a service in the communications device to another communications device except the communications device.

In this embodiment of the present invention, when the current service load of the communications device is relatively low, the power supply device and the cooling device do not need to output lots of electric energy and coldness. In this state, a load ratio of the output power of the power supply device and that of the cooling capacity of the cooling device are low, so that the energy is vainly consumed. Alternatively, when the current load of the communications device is relatively high, the power supply device and the cooling device need to output lots of electric energy and coldness to meet the requirement of the communications device. In this state, the power supply device and the cooling device both work at a low energy efficiency point. Therefore, in order to not only ensure the stability of the communications device but also reduce the energy consumption, the management device may dynamically schedule a service from another communications device to the communications device, or schedule a service in the communications device to another communications device, so that service load of the communications device after scheduling matches the output power of the power supply device and the cooling capacity of the cooling device, thereby reducing energy loss.

Optionally, on the basis of the foregoing fourth optional embodiment, in a fifth optional embodiment of the energy consumption management method provided by this embodiment of the present invention,
before the determining, by the management device, service load of the communications device that can be met by the current output power of the power supply device and the current cooling capacity of the cooling device, the method may further include:
adjusting, by the management device, output power of the power supply device to output power corresponding to an optimal energy efficiency point of the power supply device;
and/or adjusting cooling capacity of the cooling device to cooling capacity corresponding to an optimal energy efficiency point of the cooling device.

Correspondingly, the determining, by the management device, service load of the communications device that can be met by the current output power of the power supply device and the current cooling capacity of the cooling device may include:
determining, by the management device, service load of the communications device that can be borne by the output power corresponding to the optimal energy efficiency point of the power supply device and/or the cooling capacity corresponding to the optimal energy efficiency point of the cooling device; and
the scheduling, by the management device according to the service load of the communications device that can be met, a service from another communications device except the communications device to the communications device, or scheduling a service in the communications device to another communications device except the communications device may include:
   scheduling, by the management device according to the service load of the communications device that can be borne, a service from another communications device except the communications device to the communications device, or scheduling a service in the communications device to another communications device except the communications device.

In this embodiment of the present invention, before service scheduling, one or both of the power supply device and the cooling device may be adjusted. The output power of the power supply device is adjusted to the output power corresponding to the optimal energy efficiency point of the power supply device, and the cooling capacity of the cooling device is adjusted to the cooling capacity corresponding to the optimal energy efficiency point of the cooling device. In this way, one or both of the power supply device and the cooling device work at the optimal energy efficiency point, thereby reducing energy loss, and the caused energy loss is lowest when the power supply device and the cooling device both work at the optimal energy efficiency point. By using an example in which both are adjusted, according to the service load of the communications device that can be borne by the output power corresponding to the optimal energy efficiency point of the power supply device and the cooling capacity corresponding to the optimal energy efficiency point of the cooling device, and according to the service load of the communications device that can be borne, a service is scheduled from another communications device except the communications device to the communications device or a service in the communications device is scheduled to another communications device except the communications device, so that the service load matches the output power of the power supply device working at the optimal energy efficiency point and the cooling capacity of the cooling device working at the optimal energy efficiency point, thereby reducing energy loss of the data center. When only the output power of the power supply device is adjusted to the output power corresponding to the optimal energy efficiency point or only the cooling capacity of the cooling device is adjusted to the cooling capacity corresponding to the optimal energy efficiency point, service load of the communications device that can be borne may be determined according to the output power corresponding to the optimal energy efficiency point of the power supply device or the cooling capacity corresponding to the optimal energy efficiency point of the cooling device.

Optionally, on the basis of the embodiment corresponding to FIG. 3 or any one of the first to the fifth optional embodiments, in a sixth optional embodiment of the energy consumption management method provided by this embodiment of the present invention, the method may further include:
acquiring, by the management device, inner temperature information of the communications device from the communications device; and
adjusting, by the management device, the cooling capacity of the cooling device according to a magnitude relationship between the inner temperature information and a first pre-configured temperature threshold.

In this embodiment of the present invention, the inner temperature information may be temperature of an inner chip of the communications device or temperature information of the inside of an air inlet of the communications device. The management device may compare the inner temperature information reported by the communications device with the first pre-configured temperature threshold that is pre-configured, and raise the cooling capacity of the cooling device when the inner temperature information is greater than the first pre-configured temperature threshold, so as to increase the coldness. When the inner temperature information is less than the first pre-configured temperature threshold, the management device lowers the cooling capacity of the cooling device, so as to reduce energy loss.

Optionally, on the basis of the embodiment corresponding to FIG. 3 or any one of the first to the fifth optional embodiments, in a seventh optional embodiment of the energy consumption management method provided by this embodiment of the present invention, the method may further include:
acquiring, by the management device, outer temperature information of the communications device from the environment monitoring device; and
adjusting, by the management device, the cooling capacity of the cooling device according to a magnitude relationship between the outer temperature information and a second pre-configured temperature threshold.

In this embodiment of the present invention, the outer temperature information may be temperature information of the outside of an air inlet of the communications device. The management device may compare the outer temperature information reported by the environment monitoring device with the second pre-configured temperature threshold that is pre-configured, and raise the cooling capacity of the cooling device when the outer temperature information is greater than the second pre-configured temperature threshold, so as to increase the coldness. When the outer temperature information is less than the second pre-configured temperature threshold, the management device lowers the cooling capacity of the cooling device, so as to reduce energy loss. The first pre-configured temperature threshold may be the same as or different from the second pre-configured temperature threshold. In consideration of that inner temperature of the communications device is undoubtedly higher than outer temperature of the communications device, the second pre-configured temperature threshold may be set to be lower than the first pre-configured temperature threshold, so as to cool the communications device better.

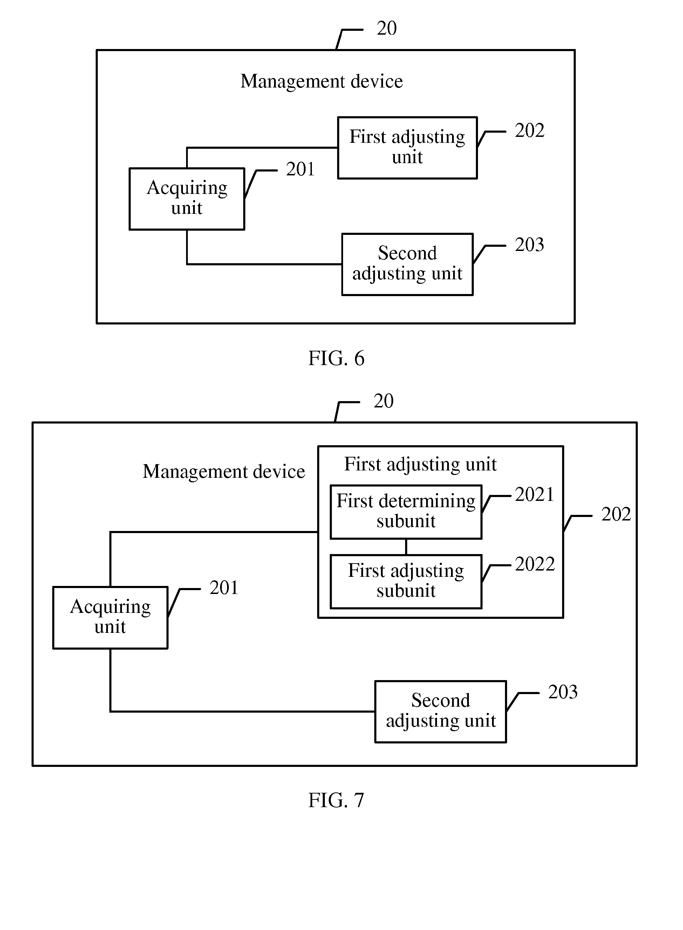

Referring to FIG. 6, a management device provided by an embodiment of the present invention is applied to a data center, where the data center further includes a communications device, a cooling device, and a power supply device, the cooling device cools the communications device and the power supply device, and the power supply device supplies power to the communications device and the cooling device, where the management device 20 includes:
an acquiring unit 201, configured to acquire current service load of the communications device, current output power of the power supply device, and current cooling capacity of the cooling device; and
a first adjusting unit 202, configured to adjust the current output power of the power supply device and the current cooling capacity of the cooling device that are acquired by the acquiring unit 201, so that adjusted output power of the power supply device and adjusted cooling capacity of the cooling device match the current service load of the communications device; or
a second adjusting unit 203, configured to adjust the current service load of the communications device that is acquired by the acquiring unit 201, so that adjusted service load of the communications device matches the current output power of the power supply device and the current cooling capacity of the cooling device.

The management device provided by this embodiment of the present invention is applied to a data center, where the data center further includes a communications device, a cooling device, and a power supply device, the cooling device cools the communications device and the power supply device, and the power supply device supplies power to the communications device and the cooling device. The management device 20 includes: an acquiring unit 201, configured to acquire current service load of the communications device, current output power of the power supply device, and current cooling capacity of the cooling device; and a first adjusting unit 202, configured to adjust the current output power of the power supply device and the current cooling capacity of the cooling device that are acquired by the acquiring unit 201, so that adjusted output power of the power supply device and adjusted cooling capacity of the cooling device match the current service load of the communications device; or a second adjusting unit 203, configured to adjust the current service load of the communications device that is acquired by the acquiring unit 201, so that adjusted service load of the communications device matches the current output power of the power supply device and the current cooling capacity of the cooling device. Compared with the prior art in which low energy utilization efficiency of the power supply device and the cooling device is caused by generally low load of the communications device, resulting in high energy loss, the energy consumption management device provided by this embodiment of the present invention can enable cooling capacity of the cooling device and output power of the power supply device to match load of the communications device by adjusting the service load of the communications device or adjusting the cooling capacity of the cooling device and the output power of the power supply device, thereby improving the energy utilization efficiency of the power supply device and the cooling device, and reducing waste of energy.

Optionally, on the basis of the embodiment corresponding to FIG. 6, referring to FIG. 7, in another embodiment of the management device provided by this embodiment of the present invention, the first adjusting unit 202 includes:
a first determining subunit 2021, configured to determine output power of the power supply device and cooling capacity of the cooling device that are required by the current service load of the communications device; and
a first adjusting subunit 2022, configured to adjust, according to the required output power of the power supply device and the required cooling capacity of the cooling device that are determined by the first determining subunit 2021, the current output power of the power supply device to the required output power of the power supply device and adjust the current cooling capacity of the cooling device to the required cooling capacity of the cooling device.

Optionally, on the basis of the embodiment corresponding to FIG. 7, in another embodiment of the management device provided by this embodiment of the present invention,
the first adjusting subunit 2022 is specifically configured to: when there are multiple power supply devices, adjust output power of at least one power supply device of the multiple power supply devices to output power corresponding to an optimal energy efficiency point of the power supply device, and turn off power supply devices other than the at least one power supply device.

Optionally, on the basis of the embodiment corresponding to FIG. 7 or the optional embodiment, in another embodiment of the management device provided by this embodiment of the present invention,
the first adjusting subunit 2022 is specifically configured to: when there are multiple cooling devices, adjust cooling capacity of at least one cooling device of the multiple cooling devices to cooling capacity corresponding to an optimal energy efficiency point of the cooling device, and turn off cooling devices other than the at least one cooling device.

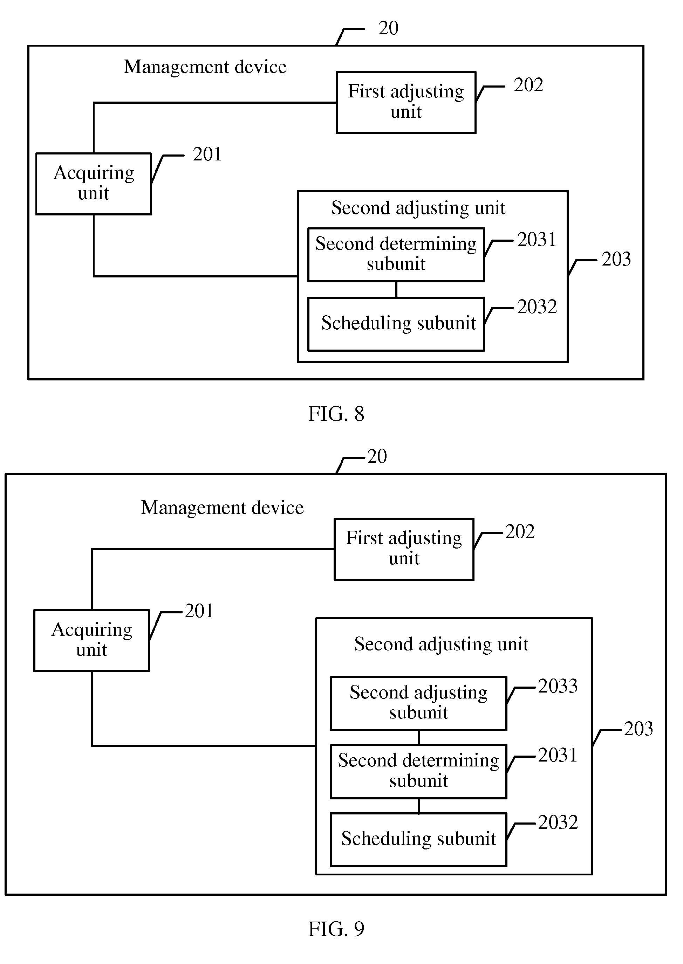

Optionally, on the basis of the embodiment corresponding to FIG. 6, referring to FIG. 8, in another embodiment of the management device provided by this embodiment of the present invention, the second adjusting unit 203 includes:
a second determining subunit 2031, configured to determine service load of the communications device that can be met by the current output power of the power supply device and the current cooling capacity of the cooling device; and
a scheduling subunit 2032, configured to schedule, according to the service load of the communications device that can be met and that is determined by the second determining subunit 2031, a service from another communications device except the communications device to the communications device, or schedule a service in the communications device to another communications device except the communications device.

Optionally, on the basis of the embodiment corresponding to FIG. 8, referring to FIG. 9, in another embodiment of the management device provided by this embodiment of the present invention, the second adjusting unit 203 further includes a second adjusting subunit 2033, where
the second adjusting subunit 2033 is configured to adjust output power of the power supply device to output power corresponding to an optimal energy efficiency point of the power supply device; and/or adjust cooling capacity of the cooling device to cooling capacity corresponding to an optimal energy efficiency point of the cooling device;
the second determining subunit 2031 is configured to determine service load of the communications device that can be borne by the output power corresponding to the optimal energy efficiency point of the power supply device and/or the cooling capacity corresponding to the optimal energy efficiency point of the cooling device after adjustment of the second adjusting subunit 2033; and
the scheduling subunit 2032 is configured to schedule, according to the service load of the communications device that can be borne and that is determined by the second determining subunit 2031, a service from another communications device except the communications device to the communications device, or schedule a service in the communications device to another communications device except the communications device.

Optionally, on the basis of any one of the foregoing embodiments corresponding to FIG. 6 to FIG. 9, in another embodiment of the management device 20 provided by this embodiment of the present invention,
the acquiring unit 201 is further configured to acquire inner temperature information of the communications device from the communications device; and the first adjusting unit 202 is further configured to adjust the cooling capacity of the cooling device according to a magnitude relationship between the inner temperature information acquired by the acquiring unit 201 and a first pre-configured temperature threshold.

Optionally, on the basis of any one of the foregoing embodiments corresponding to FIG. 6 to FIG. 9, in another embodiment of the management device 20 provided by this embodiment of the present invention,
the acquiring unit 201 is further configured to acquire outer temperature information of the communications device from an environment monitoring device; and the first adjusting unit 202 is further configured to adjust the cooling capacity of the cooling device according to a magnitude relationship between the outer temperature information acquired by the acquiring unit 201 and a second pre-configured temperature threshold.

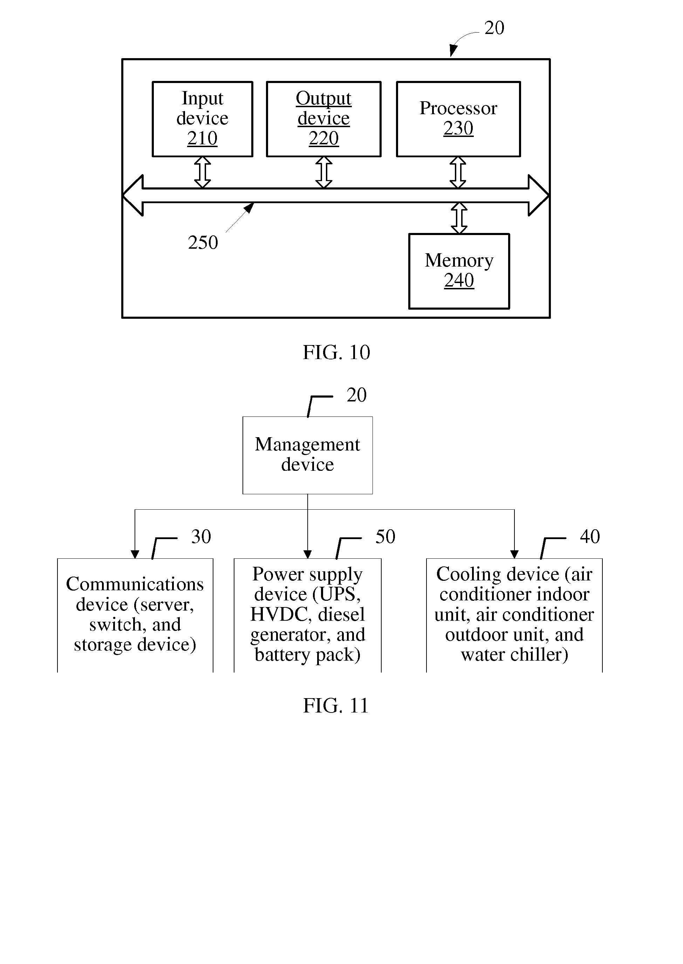

FIG. 10 is a schematic structural diagram of a management device 20 according to an embodiment of the present invention. The management device 20 may include an input device 210, an output device 220, a processor 230, and a memory 240.

The management device 20 provided by this embodiment of the present invention is applied to a data center, where the data center further includes a communications device, a cooling device, and a power supply device, the cooling device cools the communications device and the power supply device, and the power supply device supplies power to the communications device and the cooling device.

The memory 240 may include a read-only memory and a random access memory, and provide instructions and data for the processor 230. A part of the memory 240 may further include a nonvolatile random access memory (NVRAM).

The memory 240 stores the following elements, an executable module or a data structure, or their subsets, or their extended sets:
operation instructions, including various operation instructions and used to implement various operations; and
an operating system, including various system programs and used to implement various basic services and process a hardware-based task.

In this embodiment of the present invention, the processor 230 executes the following operations by invoking the operation instructions stored by the memory 240 (the operation instructions may be stored in the operating system):
acquiring current service load of the communications device, current output power of the power supply device, and current cooling capacity of the cooling device; and
adjusting the current output power of the power supply device and the current cooling capacity of the cooling device, so that adjusted output power of the power supply device and adjusted cooling capacity of the cooling device match the current service load of the communications device; or
adjusting the current service load of the communications device, so that adjusted service load of the communications device matches the current output power of the power supply device and the current cooling capacity of the cooling device.

The management device 20 provided by this embodiment of the present invention can enable output power of a cooling device and output power of a power supply device to match load of a communications device by adjusting service load of the communications device or adjusting the output power of the cooling device and the output power of the power supply device, thereby improving energy utilization efficiency of the power supply device and the cooling device, and reducing waste of energy.

The processor 230 controls operations of the management device 20, and the processor 230 may also be referred to as a CPU (Central Processing Unit, central processing unit). The memory 240 may include a read-only memory and a random access memory, and provide instructions and data for the processor 230. A part of the memory 240 may further include a nonvolatile random access memory (NVRAM). In specific applications, components of the management device 20 are coupled together by using a bus system 250, where the bus system 250 may further include, in addition to a data bus, a power bus, a control bus, and a status signal bus. For clarity, various buses are all marked as the bus system 250 in the figure.

The method disclosed in the foregoing embodiments of the present invention may be applied to the processor 230, or may be implemented by the processor 230. The processor 230 may be an integrated circuit chip having a signal processing capability. During implementation, the steps of the methods may be performed by a hardware integrated logic circuit in the processor 230 or by instructions in the form of software. The processor 230 may be a general-purpose processor, a digital signal processor (DSP), an application-specific integrated circuit (ASIC), a field programmable gate array (FPGA), or another programmable logic device, discrete gate or transistor logic device, or discrete hardware assembly, which can implement or execute the methods, the steps, and logical block diagrams disclosed in the embodiments of the present invention. The general-purpose processor may be a microprocessor, or the processor may be any conventional processor. The methods and the steps disclosed in the embodiments of the present invention may be directly executed and implemented by a hardware decoding processor, or may be executed and implemented by a combination of hardware and software modules in the decoding processor. The software module may be located in a mature storage medium in the art, such as a random access memory, a flash memory, a read-only memory, a programmable read-only memory, an electrically erasable programmable read-only memory, or a register. The storage medium is located in the memory 240; and the processor 230 reads information in the memory 240, and performs the steps of the methods by using hardware of the processor 230.

Optionally, the processor 230 is specifically configured to determine output power of the power supply device and cooling capacity of the cooling device that are required by the current service load of the communications device; and adjust, according to the required output power of the power supply device and the required cooling capacity of the cooling device, the current output power of the power supply device to the required output power of the power supply device and adjust the current cooling capacity of the cooling device to the required cooling capacity of the cooling device. Optionally, the processor 230 is specifically configured to: when there are multiple power supply devices, adjust output power of at least one power supply device of the multiple power supply devices to output power corresponding to an optimal energy efficiency point of the power supply device, and turn off power supply devices other than the at least one power supply device. Optionally, the processor 230 is specifically configured to: when there are multiple cooling devices, adjust cooling capacity of at least one cooling device of the multiple cooling devices to cooling capacity corresponding to an optimal energy efficiency point of the cooling device, and turn off cooling devices other than the at least one cooling device.

Optionally, the processor 230 is specifically configured to determine service load of the communications device that can be met by the current output power of the power supply device and the current cooling capacity of the cooling device; and schedule, according to the service load of the communications device that can be met, a service from another communications device except the communications device to the communications device, or schedule a service in the communications device to another communications device except the communications device.

Optionally, the processor 230 is further configured to adjust output power of the power supply device to output power corresponding to an optimal energy efficiency point of the power supply device; and/or adjust cooling capacity of the cooling device to cooling capacity corresponding to an optimal energy efficiency point of the cooling device.

The processor 230 is specifically configured to determine service load of the communications device that can be borne by the output power corresponding to the optimal energy efficiency point of the power supply device and/or the cooling capacity corresponding to the optimal energy efficiency point of the cooling device; and schedule, according to the service load of the communications device that can be borne, a service from another communications device except the communications device to the communications device, or schedule a service in the communications device to another communications device except the communications device.

Optionally, the processor 230 is further configured to acquire inner temperature information of the communications device from the communications device, and adjust the cooling capacity of the cooling device according to a magnitude relationship between the inner temperature information and a first pre-configured temperature threshold.

Optionally, the processor 230 is further configured to acquire outer temperature information of the communications device from an environment monitoring device, and adjust the cooling capacity of the cooling device according to a magnitude relationship between the outer temperature information and a second pre-configured temperature threshold.

Referring to FIG. 11, an embodiment of a data center provided by an embodiment of the present invention includes: a management device 20, a communications device 30, a cooling device 40, and a power supply device 50, where the cooling device 40 cools the communications device 30 and the power supply device 50, and the power supply device 30 supplies power to the communications device 30 and the cooling device 40.

The management device 20 is configured to:
acquire current service load of the communications device, current output power of the power supply device, and current cooling capacity of the cooling device; and
adjust the current output power of the power supply device and the current cooling capacity of the cooling device, so that adjusted output power of the power supply device and adjusted cooling capacity of the cooling device match the current service load of the communications device; or
adjust the current service load of the communications device, so that adjusted service load of the communications device matches the current output power of the power supply device and the current cooling capacity of the cooling device.

Compared with the prior art in which a power supply device and a cooling device work in a state of a low load ratio because of generally low load of a communications device, causing low energy utilization efficiency of the power supply device and the cooling device and high energy loss, the data center provided by this embodiment of the present invention can enable cooling capacity of the cooling device and output power of the power supply device to match load of the communications device by adjusting service load of the communications device or adjusting the cooling capacity of the cooling device and the output power of the power supply device, thereby improving the energy utilization efficiency of the power supply device and the cooling device, enabling the cooling device and the power supply device to run towards a highest point in energy efficiency curves, and reducing waste of energy.

A person of ordinary skill in the art may understand that all or some of the steps of the methods in the embodiments may be implemented by a program instructing relevant hardware (such as a processor). The program may be stored in a computer readable storage medium. The storage medium may include: a ROM, a RAM, a magnetic disk, or an optical disc.

The energy consumption management method, the management device, and the data center provided by the embodiments of the present invention are described in detail above. In this specification, specific examples are used to describe the principle and implementation manners of the present invention, and the description of the embodiments is only intended to help understand the method and core idea of the present invention. Meanwhile, a person of ordinary skill in the art may, based on the idea of the present invention, make modifications with respect to the specific implementation manners and the application scope. Therefore, the content of this specification shall not be construed as a limitation to the present invention.

## Claims

1. An energy consumption management method, wherein the method is applied to a management device of a data center, the data center further comprises a communications device, a cooling device, and a power supply device, the cooling device cools the communications device and the power supply device, and the power supply device supplies power to the communications device and the cooling device, wherein the method comprises:
acquiring, by the management device, current service load of the communications device, current output power of the power supply device, and current cooling capacity of the cooling device; and
adjusting, by the management device, the current output power of the power supply device and the current cooling capacity of the cooling device, so that adjusted output power of the power supply device and adjusted cooling capacity of the cooling device match the current service load of the communications device; or
adjusting, by the management device, the current service load of the communications device, so that adjusted service load of the communications device matches the current output power of the power supply device and the current cooling capacity of the cooling device.

2. The method according to claim 1, wherein the adjusting, by the management device, the current output power of the power supply device and the current cooling capacity of the cooling device, so that adjusted output power of the power supply device and adjusted cooling capacity of the cooling device match the current service load of the communications device comprises:
determining, by the management device, output power of the power supply device and cooling capacity of the cooling device that are required by the current service load of the communications device; and
adjusting, by the management device according to the required output power of the power supply device and the required cooling capacity of the cooling device, the current output power of the power supply device to the required output power of the power supply device and adjusting the current cooling capacity of the cooling device to the required cooling capacity of the cooling device.

3. The method according to claim 2, wherein when there are multiple power supply devices, the adjusting the current output power of the power supply device to the required output power of the power supply device comprises:
adjusting output power of at least one power supply device of the multiple power supply devices to output power corresponding to an optimal energy efficiency point of the power supply device, and turning off power supply devices other than the at least one power supply device.

4. The method according to claim 2 or 3, wherein when there are multiple cooling devices, the adjusting the current cooling capacity of the cooling device to the required cooling capacity of the cooling device comprises:
adjusting cooling capacity of at least one cooling device of the multiple cooling devices to cooling capacity corresponding to an optimal energy efficiency point of the cooling device, and turning off cooling devices other than the at least one cooling device.

5. The method according to claim 1, wherein the adjusting, by the management device, the current service load of the communications device, so that adjusted service load of the communications device matches the current output power of the power supply device and the current cooling capacity of the cooling device comprises:
determining, by the management device, service load of the communications device that can be met by the current output power of the power supply device and the current cooling capacity of the cooling device; and
scheduling, by the management device according to the service load of the communications device that can be met, a service from another communications device except the communications device to the communications device, or scheduling a service in the communications device to another communications device except the communications device.

6. The method according to claim 5, wherein before the determining, by the management device, service load of the communications device that can be met by the current output power of the power supply device and the current cooling capacity of the cooling device, the method further comprises:
adjusting, by the management device, output power of the power supply device to output power corresponding to an optimal energy efficiency point of the power supply device; and/or adjusting cooling capacity of the cooling device to cooling capacity corresponding to an optimal energy efficiency point of the cooling device; wherein
correspondingly, the determining, by the management device, service load of the communications device that can be met by the current output power of the power supply device and the current cooling capacity of the cooling device comprises:
determining, by the management device, service load of the communications device that can be borne by the output power corresponding to the optimal energy efficiency point of the power supply device and/or the cooling capacity corresponding to the optimal energy efficiency point of the cooling device; and
the scheduling, by the management device according to the service load of the communications device that can be met, a service from another communications device except the communications device to the communications device, or scheduling a service in the communications device to another communications device except the communications device comprises:
scheduling, by the management device according to the service load of the communications device that can be borne, a service from another communications device except the communications device to the communications device, or scheduling a service in the communications device to another communications device except the communications device.

7. The method according to any one of claims 1 to 6, wherein the method further comprises:
acquiring, by the management device, inner temperature information of the communications device from the communications device; and
adjusting, by the management device, the cooling capacity of the cooling device according to a magnitude relationship between the inner temperature information and a first pre-configured temperature threshold.

8. The method according to any one of claims 1 to 6, wherein the data center further comprises an environment monitoring device, and the method further comprises:
acquiring, by the management device, outer temperature information of the communications device from the environment monitoring device; and
adjusting, by the management device, the cooling capacity of the cooling device according to a magnitude relationship between the outer temperature information and a second pre-configured temperature threshold.

9. A management device, wherein the management device is applied to a data center, the data center further comprises a communications device, a cooling device, and a power supply device, the cooling device cools the communications device and the power supply device, and the power supply device supplies power to the communications device and the cooling device, wherein the management device comprises:
an acquiring unit, configured to acquire current service load of the communications device, current output power of the power supply device, and current cooling capacity of the cooling device; and
a first adjusting unit, configured to adjust the current output power of the power supply device and the current cooling capacity of the cooling device that are acquired by the acquiring unit, so that adjusted output power of the power supply device and adjusted cooling capacity of the cooling device match the current service load of the communications device; or
a second adjusting unit, configured to adjust the current service load of the communications device that is acquired by the acquiring unit, so that adjusted service load of the communications device matches the current output power of the power supply device and the current cooling capacity of the cooling device.

10. The management device according to claim 9, wherein the first adjusting unit comprises:
a first determining subunit, configured to determine output power of the power supply device and cooling capacity of the cooling device that are required by the current service load of the communications device; and
a first adjusting subunit, configured to adjust, according to the required output power of the power supply device and the required cooling capacity of the cooling device that are determined by the first determining subunit, the current output power of the power supply device to the required output power of the power supply device and adjust the current cooling capacity of the cooling device to the required cooling capacity of the cooling device.

11. The management device according to claim 10, wherein
the first adjusting subunit is specifically configured to: when there are multiple power supply devices, adjust output power of at least one power supply device of the multiple power supply devices to output power corresponding to an optimal energy efficiency point of the power supply device, and turn off power supply devices other than the at least one power supply device.

12. The management device according to claim 10 or 11, wherein
the first adjusting subunit is specifically configured to: when there are multiple cooling devices, adjust cooling capacity of at least one cooling device of the multiple cooling devices to cooling capacity corresponding to an optimal energy efficiency point of the cooling device, and turn off cooling devices other than the at least one cooling device.

13. The management device according to claim 9, wherein the second adjusting unit comprises:
a second determining subunit, configured to determine service load of the communications device that can be met by the current output power of the power supply device and the current cooling capacity of the cooling device; and
a scheduling subunit, configured to schedule, according to the service load of the communications device that can be met and that is determined by the second determining subunit, a service from another communications device except the communications device to the communications device, or schedule a service in the communications device to another communications device except the communications device.

14. The management device according to claim 13, wherein the second adjusting unit further comprises a second adjusting subunit, wherein
the second adjusting subunit is configured to adjust output power of the power supply device to output power corresponding to an optimal energy efficiency point of the power supply device;
and/or adjust cooling capacity of the cooling device to cooling capacity corresponding to an optimal energy efficiency point of the cooling device; wherein
the second determining subunit is configured to determine service load of the communications device that can be borne by the output power corresponding to the optimal energy efficiency point of the power supply device and/or the cooling capacity corresponding to the optimal energy efficiency point of the cooling device after adjustment of the second adjusting subunit; and
the scheduling subunit is configured to schedule, according to the service load of the communications device that can be borne and that is determined by the second determining subunit, a service from another communications device except the communications device to the communications device, or schedule a service in the communications device to another communications device except the communications device.

15. The management device according to any one of claims 9 to 14, wherein
the acquiring unit is further configured to acquire inner temperature information of the communications device from the communications device; and
the first adjusting unit is further configured to adjust the cooling capacity of the cooling device according to a magnitude relationship between the inner temperature information acquired by the acquiring unit and a first pre-configured temperature threshold.

16. The management device according to any one of claims 9 to 14, wherein
the acquiring unit is further configured to acquire outer temperature information of the communications device from an environment monitoring device; and
the first adjusting unit is further configured to adjust the cooling capacity of the cooling device according to a magnitude relationship between the outer temperature information acquired by the acquiring unit and a second pre-configured temperature threshold.

17. A data center, comprising: a management device, a communications device, a cooling device, and a power supply device, wherein the cooling device cools the communications device and the power supply device, and the power supply device supplies power to the communications device and the cooling device;
the management device acquires current service load of the communications device, current output power of the power supply device, and current cooling capacity of the cooling device; and
the management device adjusts the current output power of the power supply device and the current cooling capacity of the cooling device, so that adjusted output power of the power supply device and adjusted cooling capacity of the cooling device match the current service load of the communications device; or
the management device adjusts the current service load of the communications device, so that adjusted service load of the communications device matches the current output power of the power supply device and the current cooling capacity of the cooling device.
